Europäisches Patentamt

European Patent Office

Office européen des brevets

(11) Publication number: **0 107 324**
**B1**

(12) **EUROPEAN PATENT SPECIFICATION**

(45) Date of publication of patent specification: **22.03.89**

(21) Application number: **83305381.2**

(22) Date of filing: **14.09.83**

(51) Int. Cl.⁴: **B 05 B 5/02,** B 05 B 9/06,
A 01 M 7/00

(54) Electrostatic sprayhead assembly.

(30) Priority: **13.10.82 GB 8229219**

(43) Date of publication of application:
**02.05.84 Bulletin 84/18**

(45) Publication of the grant of the patent:
**22.03.89 Bulletin 89/12**

(84) Designated Contracting States:
**AT BE CH DE FR GB IT LI NL SE**

(56) References cited:
**FR-A-1 225 954**
**US-A-3 164 324**
**US-A-4 240 585**
**US-A-4 331 298**

(73) Proprietor: **IMPERIAL CHEMICAL INDUSTRIES PLC**
**Imperial Chemical House Millbank**
**London SW1P 3JF (GB)**

(72) Inventor: **Jackson, Alastair James**
**The Barn Cottage South Harting**
**Petersfield Hampshire (GB)**
Inventor: **Grocott, Arend Lea**
**18 Millvale Meadows Milland**
**Liphook Hampshire (GB)**

(74) Representative: **Johnston, Walter Paul et al**
**Imperial Chemical Industries PLC Legal**
**Department: Patents PO Box 6**
**Welwyn Garden City Herts, AL7 1HD (GB)**

Courier Press, Leamington Spa, England.

# EP 0 107 324 B1

**Description**

This invention relates to electrostatic sprayhead assemblies for use with spraying devices of the type employing a blast of gas to assist transport of the liquid being sprayed.

Such devices include mistblowers which have been known for many years as a convenient and effective way of applying pesticides to crops. They may be either portable or tractor mounted. A portable machine will, for example, typically comprise an engine (e.g. a two-stroke petrol engine) driving a fan which provides a strong current of air to a spray lance carried in the operator's hand. A liquid spray reservoir, carried with the engine or fan on the operator's back, feeds liquid pesticide to a nozzle within the spray lance. The force of the air current passing through the nozzle spray lance shatters the liquid emerging from the nozzle into fine droplets, which are entrained in the current of air. They pass out through the head of the lance, and are carried by the current of air onto and into the crop being sprayed.

Mistblowers have the advantage that they produce much better penetration of pesticide sprays into crops than is obtained with devices which do not have air assistance. They can also be used to spray objects above the level of the sprayer, e.g. fruit trees. However, they do have certain disadvantages. Thus, the strong current of air they produce can carry some pesticide droplets right through the crop. Such droplets may then drift for considerable distances, and become a potential ecological hazard. This problem is increased by the method of formation of the droplets. Droplets produced by a fluid shear mechanism tend to be quite irregular in size. Many droplets are thus produced below the ideal size, and these small droplets are particularly prone to drift for long distances.

Electrostatic spraying processes are known which produce a spray of charged droplets. Such spraying processes have numerous advantages, including in particular that charged droplets are positively attracted to target plants by electrostatic forces, and coat them evenly. Both upper and lower sides of leaves can be coated. However, because of the attractive electrostatic forces, the charged spray particles find it difficult to penetrate far into a crop canopy.

Electrostatic spraying processes are of two main types. In the first type the spray droplets are formed by air or liquid pressure prior to charging, such charging typically being performed with corona discharge electrodes. Sprays formed in this way are relatively insensitive to ambient conditions including air flow, and indeed often utilise air-shear for droplet formation.

In the second type, atomisation of liquid into spray droplets takes place under the influence of an electric charge on the sprayhead, atomisation being caused predominantly by electrical forces. Such processes produce a fine uniform droplet size with high charging efficiency but are sensitive to ambient conditions such as air-flow which can interfere with spray formation.

We have now found surprisingly that it is possible to obtain satisfactory spray formation with processes of the second type when the sprayhead is located directly within the air stream produced by an air blower. In this way the advantages of efficient spray formation can be combined with the benefit of air assistance to give good crop penetration and efficient crop coverage with reduced spray drift.

Accordingly the present invention provides a sprayhead assembly comprising an electrostatic sprayhead chargeable to a high voltage and adapted to atomise liquid to be sprayed at least predominantly by electrical forces caused by the high voltage, the sprayhead being connectable to sources of high voltage and liquid, and means for forming a stream of gas, the sprayhead being located within the stream of gas in use so that atomised liquid formed by the sprayhead is at least partly entrained in the stream of gas characterised in that the means for forming a stream of gas forms a stream having two regions flowing at different speeds, a first region spaced from the sprayhead and a second region adjacent the sprayhead, the gas in the region adjacent the sprayhead flowing more slowly than the gas in the region spaced from the sprayhead.

The means for forming the stream of gas is conveniently a channel connectable to a source of gas which is generated directly or indirectly by a powered blower.

The electrostatic sprayhead is preferably of the type disclosed in our UK Patent 1,569,707 having an earthed field intensifying electrode adjacent to an electrostatically charged spray nozzle.

Specific embodiments of the invention will now be described with reference to drawings, in which:—

Figure 1 is a partial diagrammatic side view of a sprayhead assembly according to the invention connected to an air blower;

Figure 2 is an end view of the apparatus of Figure 1;

Figure 3 is a line diagram including a sprayhead assembly similar to that shown in Figure 1 and showing the control and supply system therefor;

Figure 4 is a more detailed, exploded, axial sectional view of the sprayhead forming part of the assembly of Figure 3;

Figure 5 is an axial section through another sprayhead assembly according to the invention showing a part of an air supply therefor; and

Figure 6 is a plan of the assembly of Figure 5.

The drawings are not to scale.

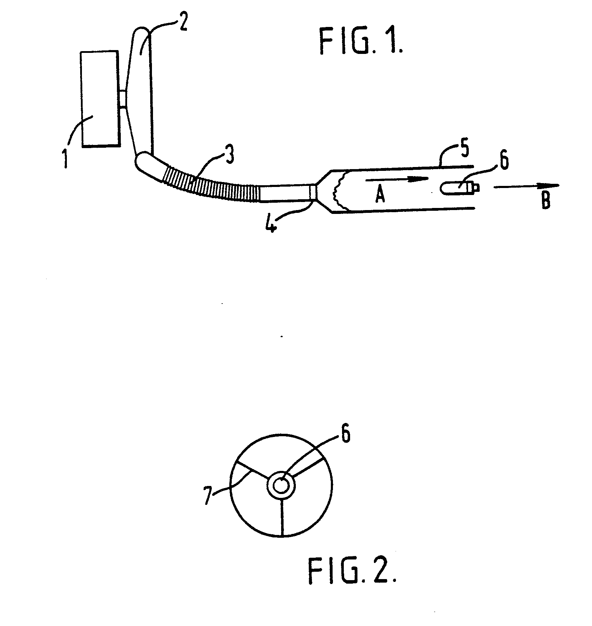

Referring to Figures 1 and 2 of the drawings an air blower consisting of a motor (1) and a fan (2) delivers air to a flexible tube (3) connected by a detachable coupling (4) to a pipe (5) of diameter approximately 9 cms forming a channel for a stream of air. The pipe (5) positions and supports electrostatic

2

sprayhead (6) (approximate diameter 4 cm) via internal struts (7) within the stream of air (diagrammatically illustrated by arrow A of Figure 1) delivered by the blower.

The electrostatic sprayhead (6) is of the type described in our UK Patent 1,569,707 having an earthed field adjusting electrode surrounding and insulated from a conducting spray nozzle charged to a potential of about 25 kilovolts.

The sprayhead is provided with a liquid supply via a flexible tube (not shown) connected to a pump. It is likewise provided with electrical connections (not shown) to earth and to a source of high voltage.

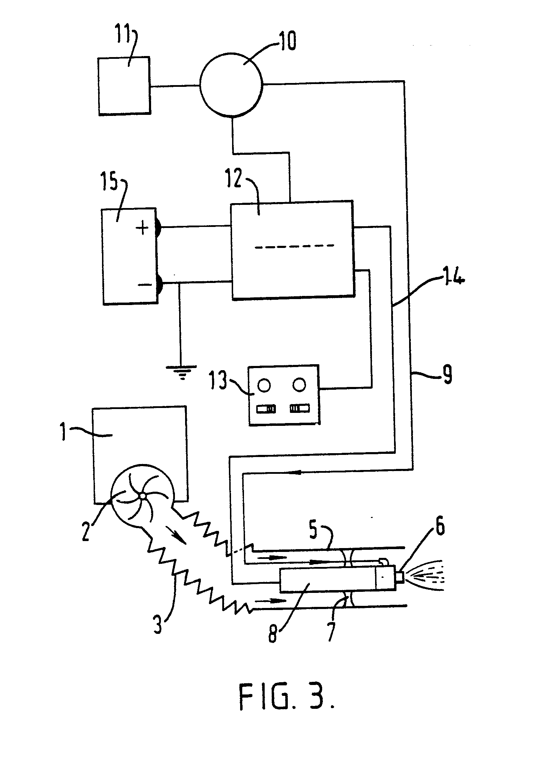

Referring to Figure 3 in an arrangement similar to that of Figures 1 and 2 the sprayhead (6) is connected to a high voltage generator (8) also located in the airstream generated by the blower (2). The sprayhead is located approximately flush with the exit of pipe (5) and is supplied with liquid via line (9) from a metering pump (10) fed from a liquid container (11) and controlled from control box (12) and control console (13). Pump (10) may be electrically driven or use engine power or pressurised gas etc. Console (13) also controls the electrical input to the high voltage generator (8) via line (14) and control box (12).

Power is supplied to the control box from a battery (15).

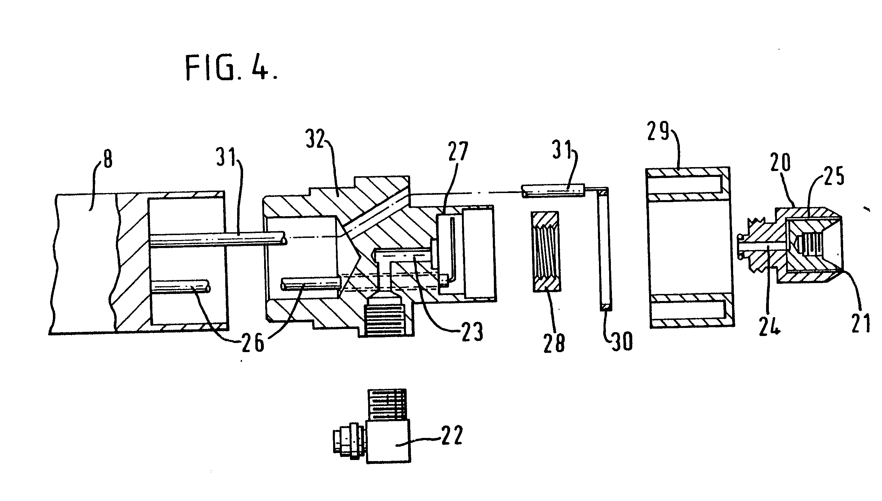

Referring to Figure 4 the sprayhead is seen to comprise a nozzle (20) of conducting material, shaped to provide an annular edge (21) from which liquid is atomised by high voltage applied to the nozzle. Liquid is supplied to the nozzle from inlet (22) via liquid channels (23, 24 and 25). High voltage is supplied to the nozzle from generator (8) via lead (26) when the nozzle (20) is screwed into recess (27) in connecting piece (32) with internally threaded collar (28).

The nozzle (20) is surrounded by a hollow insulating sleeve (29) in which a ring-shaped field-adjusting electrode (30) is located. Electrode (30) is connected to earth via lead (31).

In operation (in spraying a crop with pesticide for example) the sprayhead (6) is supplied with liquid and the appropriate electrical connections are made, resulting in a spray of highly charged particles of very uniform size being incorporated into the stream of air supplied by the blower. The droplets will of course tend to fan out but the overall effect is for the movement of particles towards the crop to be reinforced, and the spray characteristics to be influenced, by the airstream from the blower.

The apparatus illustrated is especially suitable for mounting on knap-sack frames and tractors and can be used to spray crops at a variety of angles.

The air blast materially increases penetration into the crop, thereby improving pesticide deposition within it. However, there is a much reduced tendency for droplets to be carried through the crop, because of the electrostatic force between crop and particles. In general, charged droplets carried through the crop are able to overcome the force of the airflow, by this time much attenuated, and are attracted back onto the crop. Because of the uniformity of particle size produced by electrostatic atomisation, drifting problems are much reduced.

Typical operating parameters are as follows:

    Air speed (at outlet)—20—25 metres/sec
    Nozzle to crop distance—2—4 metres
    Droplet size—approx. 30 μm
        at nozzle voltage—approx. 30 kv
        and liquid flow rate—0.05 ml/sec.

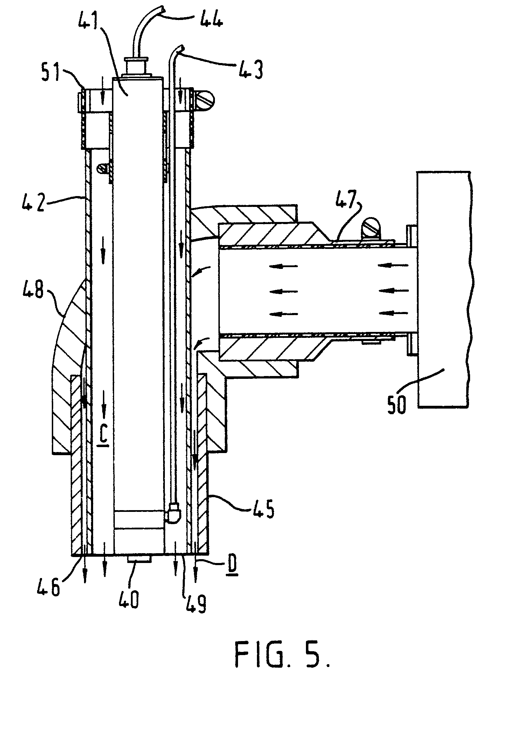

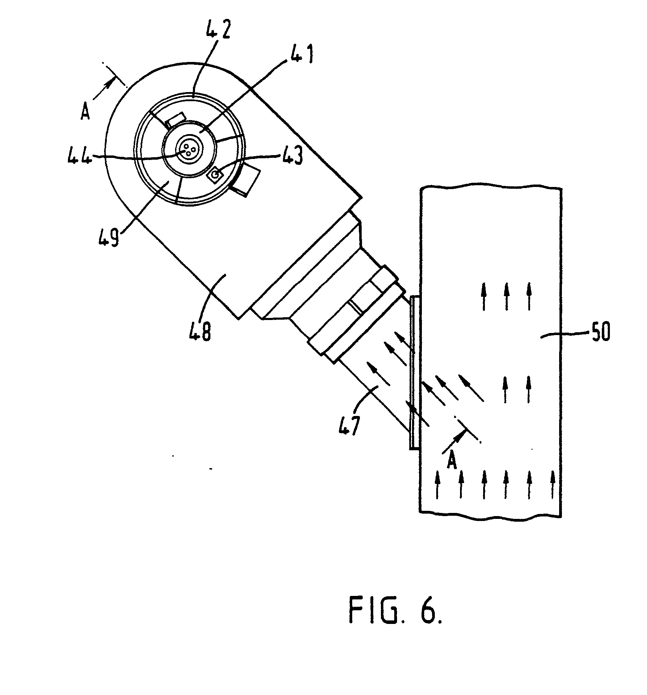

Referring to Figures 5 and 6 an alternative sprayhead assembly comprises a nozzle (40) and generator (41) of the type illustrated in Figure 4 mounted within a pipe (42) open at both ends, providing a channel (49) for a stream of air indicated by arrow C. Liquid and electrical input are provided via connections (43) and (44) respectively.

The exit-end of pipe (42) is surrounded by a second pipe (45) forming an annular air channel (46) between the two pipes. Channel (46) is supplied with air under pressure from pipe (47) via elbow union (48). Pipe (47) is connected to air trunking system 50 carried on a tractor (not shown).

In use, relatively fast-flowing pressurised air flowing through channel (46) as indicated by arrow D draws relatively slow-moving atmospheric air into the open inlet (51) of pipe (42) and past sprayhead (40). It is found that this arrangement interferes less with spray formation especially under more marginal conditions which may arise from faster liquid flow-rates or the use of liquids which do not atomise so well.

Typical operating parameters are:

    Fluid flow rate—up to 1 ml/sec
    Nozzle voltage—20—40 kv
    Air volume of pressurised air—greater than 2.5 cubic metres/min
    Air speed of pressurised air—20—40 metres/sec

Sprayhead assemblies of the present invention may be used singly or mounted in linear or circular arrays comprising more than one assembly. Circular arrays may be adapted to spray either in a radial or an axial direction.

It is also within the scope of the invention for more than one sprayhead to be located within a given air stream.

Examples of results obtained using a sprayhead assembly of the type illustrated with reference to Figures 1—4 will now be described.

Example 1

Bush tomato plants were sprayed to control whitefly using a pesticide formulation containing cypermethrin. Percentage control relative to untreated plants was recorded. Comparative results using a similar sprayhead without air assistance and a conventional hydraulic nozzle were also obtained.

The sprayhead assembly of the invention was operated as follows:

Air speed at outlet—20—25 metres/sec
Nozzle to crop distance—2—4 metres
Droplet size—approx. 30 μm
Nozzle voltage—approx. 30 kv
Flow rate of pesticide—0.05 ml/sec

The other sprayheads were operated at what were judged to be optimum conditions.
The results are given in Table I.

TABLE I

% Control against untreated

| Days after treatment | 1 Litre/ha=15 g active ingredient/ha | | Conventional 45 g ai/ha, 400 l/ha |
|---|---|---|---|
| | Electrostatic sprayhead no air assistance | Present invention | |
| 1 | 51 | 98 | 36 |
| 4 | 76 | 97 | 15 |

The results show the present invention to give by far the greatest initial knock-down and also the longest persistence in spite of the conventional treatment being applied at three times the rate per hectare.

Example 2

Trials were performed to indicate optimum air speed. Results are set out in Tables II and III from which it is seen that better results are obtained at somewhat lower air speeds than conventionally used with air blowers.

Comparison of different operating parameters
(i)  Crop—tomatoes
    Pest—whitefly
    Pesticide—cypermethrin
    Rate—1 litre/ha 15 g ai/ha

TABLE II

% Control compared with untreated: 1 day after treatment

| | Air speed 25 m/s at outlet | Air speed 50 m/s at outlet |
|---|---|---|
| Top canopy | 90 | 78 |
| In-canopy | 73 | 60 |

(ii) Crop—cucumbers
Pest—whitefly
Pesticide—cypermethrin
Rate—1 litre/ha=15 g active ingredient/ha

TABLE III

% Control compared with untreated: 1 day after treatment

|  | Air speed 25 m/s at outlet | Air speed 50 m/s at outlet |
|---|---|---|
| Top canopy | 87 | 71 |
| In-canopy | 83 | 65 |

The results show that an air speed of 25 m/s at the air outlet gives superior top canopy and in-canopy control to the higher air speed of 50 m/s at the outlet.

**Claims**

1. A sprayhead assembly comprising an electrostatic sprayhead chargeable to a high voltage and adapted to atomise liquid to be sprayed at least predominantly by electrical forces caused by the high voltage, the sprayhead being connectable to sources of high voltage and liquid, and means for forming a stream of gas, the sprayhead being located within the stream of gas in use so that atomised liquid formed by the sprayhead is at least partly entrained in the stream of gas characterised in that the means for forming a stream of gas forms a stream having two regions flowing at different speeds, a first region spaced from the sprayhead and a second region adjacent the sprayhead, the gas in the region adjacent the sprayhead flowing more slowly than the gas in the region spaced from the sprayhead.

2. A sprayhead assembly as claimed in claim 1, characterised in that the means for forming a stream of gas comprises a channel having an outer annular part for the region of the stream of gas spaced from the sprayhead and an inner part for the region of the stream of gas adjacent the sprayhead.

3. A sprayhead assembly as claimed in claim 2, characterised in that the outer part of the channel is connectable to a first source of gas and the inner part has an inlet for a second source of gas which, in use, is drawn into the inner part and past the sprayhead by the action of the first source of gas.

4. A sprayhead assembly as claimed in claim 3, characterised in that the first source of gas is air under pressure and the second source is atmospheric air.

5. A sprayhead assembly as claimed in any one of the preceding claims, characterised in that the sprayhead has a field-adjusting electrode adjacent to it and maintainable in use at earth or at a potential which is low relative to that on the sprayhead.

6. A sprayhead assembly as claimed in any one of claims 2 to 4, characterised in that the sprayhead is located in the region of the exit of the inner part of the channel.

7. A sprayhead assembly as claimed in any one of claims 1 to 4, characterised in that the source of high voltage comprises an electrode chargeable to a high voltage adjacent to the sprayhead and at least partly within the stream of gas in use.

8. A sprayhead assembly as claimed in claim 7 characterised in that the sprayhead is located substantially co-axially of the channel.

**Patentansprüche**

1. Sprühkopfanordnung mit einem elektrostatischen Sprühkopf, der auf hohe Spannung aufladbar und geeignet ist, zu versprühende Flüssigkeit zumindest überwiegend durch von der Hochspannung ausgehende elektrische Kräfte zu atomisieren, wobei der Sprühkopf an Quellen für Hochspannung und Flüssigkeit anschließbar ist, und mit einem Mittel zur Erzeugung eines Gasstroms, wobei der Sprühkopf innerhalb des Gasstroms angeordnet ist, so daß beim Gebrauch atomisierte Flüssigkeit, die durch den Sprühkopf gebildet wird, zumindest teilweise in den Gasstrom aufgenommen wird, dadurch gekennzeichnet, daß das Mittel zur Erzeugung eines Gasstroms einen Strom bildet, der zwei mit unterschiedlicher Geschwindigkeit strömende Bereiche aufweist, einen ersten Bereich, der vom Sprühkopf einen Abstand aufweist, und einen zweiten Bereich, der dem Sprühkopf benachbart ist, wobei das Gas in dem dem Sprühkopf benachbarten Bereich langsamer strömt als das Gas in dem Bereich, der vom Sprühkopf einen Abstand aufweist.

2. Sprühkopfanordnung nach Anspruch 1, dadurch gekennzeichnet, daß das Mittel zur Bildung eines Gasstroms einen Kanal aufweist, der einen äußeren ringförmigen Teil für den Bereich des Gasstroms, der einen Abstand vom Sprühkopf hat, und einen inneren Teil für den Bereich des Gasstroms, der dem Sprühkopf benachbart ist, besitzt.

3. Sprühkopfanordnung nach Anspruch 2, dadurch gekennzeichnet, daß der äußere Teil des Kanals mit einer ersten Gasquelle verbindbar ist und daß der innere Teil einen Einlaß für eine zweite Gasquelle besitzt, welches Gas beim Gebrauch durch die Wirkung der ersten Gasquelle in dem inneren Teil und am Sprühkopf vorbeigezogen wird.

4. Sprühkopfanordnung nach Anspruch 3, dadurch gekennzeichnet, daß die erste Gasquelle Druckluft und daß die zweite Gasquelle atmosphärische Luft ist.

5. Sprühkopfanordnung nach einem der vorhergehenden Ansprüche, dadurch gekennzeichnet, daß der Sprühkopf eine diesem benachbarte Feldsteuerelektrode aufweist, die beim Gebrauch auf Erdpotential oder ein solches Potential haltbar ist, das im Verhältnis zu demjenigen am Sprühkopf relativ niedrig ist.

6. Sprühkopfanordnung nach einem der Ansprüche 2 bis 4, dadurch gekennzeichnet, daß der Sprühkopf im Bereich des Austritts des inneren Teils des Kanals angeordnet ist.

7. Sprühkopfanordnung nach einem der Ansprüche 1 bis 4, dadurch gekennzeichnet, daß die Hochspannungsquelle eine auf hohe Spannung aufladbare Elektrode in der Nachbarschaft des Sprühkopfs aufweist, die beim Gebrauch zumindest teilweise im Gasstrom liegt.

8. Sprühkopfanordnung nach Anspruch 7, dadurch gekennzeichnet, daß der Sprühkopf im wesentlichen koaxial im Kanal angeordnet ist.

**Revendications**

1. Assemblage de tête de pulvérisation comprenant une tête de pulvérisation électrostatique pouvant être chargée à une haute tension et conçue pour atomiser un liquide à pulvériser au moins principalement par des forces électriques engendrées par la haute tension, la tête de pulvérisation pouvant être raccordée à des sources de haute tension et de liquide, et des moyens destinés à former un courant de gaz, la tête de pulvérisation étant placée dans le courant de gaz, lors de l'utilisation, afin qu'un liquide atomisé formé par la tête de pulvérisation soit au moins partiellement entraîné dans le courant de gaz, caractérisé en ce que les moyens destinés à former un courant de gaz forment un courant ayant deux zones s'écoulant à des vitesses différentes, une première zone espacée de la tête de pulvérisation et une seconde zone adjacente à la tête de pulvérisation, le gaz se trouvant dans la zone adjacente à la tête de pulvérisation s'écoulant plus lentement que le gaz se trouvant dans la zone espacée de la tête de pulvérisation.

2. Assemblage de tête de pulvérisation selon la revendication 1, caractérisé en ce que les moyens destinés à former un courant de gaz comprennent un canal ayant une partie annulaire extérieure pour la zone du courant de gaz espacée de la tête de pulvérisation et une partie intérieure pour la zone du courant de gaz adjacente à la tête de pulvérisation.

3. Assemblage de tête de pulvérisation selon la revendication 2, caractérisé en ce que la partie extérieure du canal peut être raccordée à une première source de gaz et la partie intérieure comporte une entrée pour une seconde source de gaz qui, lors de l'utilisation, est aspirée dans la partie intérieure et au-delà de la tête de pulvérisation par l'action de la première source de gaz.

4. Assemblage de tête de pulvérisation selon la revendication 3, caractérisé en ce que la première source de gaz est de l'air sous pression et la seconde source est de l'air atmosphérique.

5. Assemblage de tête de pulvérisation selon l'une quelconque des revendications précédentes, caractérisé en ce que la tête de pulvérisation comporte une électrode de réglage de champ adjacente à cette tête et pouvant être maintenue, lors de l'utilisation, à la terre ou à un potentiel qui est relativement bas par rapport à celui de la tête de pulvérisation.

6. Assemblage de tête de pulvérisation selon l'une quelconque des revendications 2 à 4, caractérisé en ce que la tête de pulvérisation est placée dans la zone de la sortie de la partie intérieure du canal.

7. Assemblage de tête de pulvérisation selon l'une quelconque des revendications 1 à 4, caractérisé en ce que la source de haute tension comprend une électrode pouvant être chargée à une haute tension adjacente à la tête de pulvérisation et se trouvant au moins partiellement dans le courant de gaz lors de l'utilisation.

8. Assemblage de tête de pulvérisation selon la revendication 7, caractérisé en ce que la tête de pulvérisation est disposée à peu près coaxialement au canal.

FIG. 1.

FIG. 2.

FIG. 3.

FIG. 4.

EP 0 107 324 B1

FIG. 5.

FIG. 6.